(19) Europäisches Patentamt
European Patent Office
Office européen des brevets

(11) **EP 1 212 873 B1**

(12) **FASCICULE DE BREVET EUROPEEN**

(45) Date de publication et mention
de la délivrance du brevet:
**05.11.2008 Bulletin 2008/45**

(51) Int Cl.:
*H04L 25/03* (2006.01)     *H04L 1/00* (2006.01)

(21) Numéro de dépôt: **00962592.2**

(86) Numéro de dépôt international:
**PCT/FR2000/002491**

(22) Date de dépôt: **08.09.2000**

(87) Numéro de publication internationale:
**WO 2001/020861 (22.03.2001 Gazette 2001/12)**

(54) **PROCEDE DE DECODAGE ET D'EGALISATION CONJOINTE D'UN SIGNAL NUMERIQUE PROTEGE PAR UN CODE DEFINI PAR UN TREILLIS**

VERFAHREN ZUR GEMEINSAMEN DEKODIERUNG UND ENTZERRUNG EINES DURCH EIN GITTER DEFINIERTES KODEGESICHERTES SIGNAL

METHOD FOR JOINT DECODING AND EQUALISING OF A DIGITAL SIGNAL PROTECTED BY A TRELLIS-DEFINED CODE

(84) Etats contractants désignés:
**DE FI GB IT SE**

(30) Priorité: **13.09.1999 FR 9911411**

(43) Date de publication de la demande:
**12.06.2002 Bulletin 2002/24**

(73) Titulaire: **FRANCE TELECOM**
**75015 Paris (FR)**

(72) Inventeurs:
• **TORTELIER, Patrick**
**F-92110 Clichy (FR)**
• **VISOZ, Rapha¬l**
**F-92130 Issy-les-Moulineaux (FR)**

(74) Mandataire: **Loisel, Bertrand**
**Cabinet Plasseraud**
**52 rue de la Victoire**
**75440 Paris Cedex 09 (FR)**

(56) Documents cités:
**EP-A- 0 758 167     EP-A- 0 858 196**
**EP-A- 0 889 612**

• **RYUJI KOHNO ET AL: "AN AUTOMATIC EQUALIZER INCLUDING A VITERBI DECODER FOR TRELLIS CODED MODULATION SYSTEM" INTERNATIONAL CONFERENCE ON ACOUSTICS, SPEECH & SIGNAL PROCESSING. ICASSP,US,NEW YORK, IEEE, vol. CONF. 14, 1989, pages 1368-1371, XP000090356**
• **HASHIMOTO T: "A LIST-TYPE REDUCED-CONSTRAINT GENERALIZATION OF THE VITERBI ALGORITHM" IEEE TRANSACTIONS ON INFORMATION THEORY,US,IEEE INC. NEW YORK, vol. 33, no. 6, 1 novembre 1987 (1987-11-01), pages 866-876, XP000575317 ISSN: 0018-9448 cité dans la demande**

## Description

L'invention concerne un procédé de décodage et d'égalisation conjointe d'un signal numérique protégé par un code défini par un treillis.

Avec l'avènement et le développement récents de l'échange d'informations par l'intermédiaire de messages numériques, la transmission fiable et performante de données numériques est devenue un enjeu économique.

Parmi les modes de transmission utilisés, la transmission numérique par paquets occupe une place prééminente, en raison de la flexibilité et de la fiabilité des protocoles de transmission de ces données.

Toutefois, le développement de transmissions à très haut débit sur canaux radioélectriques, présentant des caractéristiques de sélectivité en fréquence variables dans le temps, rend nécessaire de soumettre les données numériques, constitutives de ces messages et support de ces informations, à un processus de protection par codage spécifique. Ces processus de protection ont pour objet d'introduire dans les données numériques une certaine redondance, laquelle, en présence de dégradation de ces données du fait de la transmission, permet, dans certaines conditions, de reconstituer le signal d'origine. A titre d'exemple non limitatif, on peut citer la protection de données numériques par un code convolutif de rendement R = k/n où le rendement k/n est représentatif de la redondance introduite, et la transmission ATM (*Asynchronous Transmission Mode*) sur un lien radio, avec granularité au niveau des cellules ATM. On rappelle que la notion de granularité implique la possibilité de transmission de chaque cellule ATM isolée, sans entrelacement des cellules.

En raison de la nature physique du canal radioélectrique, la transmission de données numériques s'effectue en présence de trajets multiples de propagation. La réception et le décodage de ces messages nécessitent en conséquence une égalisation du signal reçu. La complexité des traitements d'égalisation augmente très rapidement avec la dispersion des retards, et, également, avec le débit des symboles transmis. C'est en particulier le cas en milieu urbain, lors de la transmission de signaux et messages de radiotéléphonie mobile.

La protection introduite par codage de ces données numériques transmises permet de remédier partiellement aux erreurs introduites. Toutefois, l'égalisation rendue nécessaire par les interférences sur les symboles, dues aux trajets multiples, n'est jamais parfaite et il est alors nécessaire de disperser le plus possible les bouffées d'erreurs en sortie de l'égaliseur, afin que le décodeur canal puisse fonctionner sur un signal à densité d'erreur sensiblement constante plus réduite.

Un tel mode opératoire peut être obtenu par un processus d'entrelacement des données codées, ce qui interdit la notion de granularité, et qui, en outre, introduit un retard que l'on cherche nécessairement à minimiser, ce qui a priori apparaît contradictoire.

De plus, pour de hauts débits, la taille de l'entrelacement devient prohibitive.

D'autre part, la présence d'un décodeur de canal en aval du dispositif d'égalisation, le séquencement égalisation/décodage étant rendu nécessaire par le séquencement codage/transmission/trajets multiples à l'émission, incite à mettre en oeuvre un processus d'égalisation donnant des symboles égalisés souples, c'est-à-dire dont la valeur ferme est assortie d'une valeur de probabilité de vraisemblance, ce qui augmente d'autant la complexité de l'égalisation et du traitement global.

Afin de s'affranchir du processus d'entrelacement précité, une solution décrite par le document EP 0 858 196 consiste à effectuer un regroupement de plusieurs observations consécutives, pour constituer un vecteur d'observation, obtenues par transmission de données sources soumises à un codage convolutif.

Un tel processus apparait d'une mise en oeuvre complexe, dans la mesure où le vecteur d'observation et le nombre d'observations composant ce dernier doivent être une fonction de la mémoire du canal de transmission et du taux de codage convolutif.

Le processus mis en oeuvre par le document EP 0 858 196 précité implique le calcul d'une pluralité de vecteurs décodés possibles et d'une valeur de probabilité que chacun de ces derniers correspond à un vecteur d'observation.

La présente invention a pour objet de remédier aux inconvénients des procédés de l'art antérieur précédemment cités.

Un objet de la présente invention est en conséquence la mise en oeuvre d'un procédé permettant d'effectuer conjointement les opérations d'égalisation et de décodage de canal directement sur le treillis du décodeur canal, treillis dont la complexité est fixe et indépendante de la longueur de la réponse impulsionnelle du canal.

Un autre objet de la présente invention est la mise en oeuvre d'un procédé permettant d'effectuer conjointement les opérations d'égalisation et de décodage de canal de données numériques transmises par paquets, en l'absence d'entrelacement sur plusieurs paquets, ce mode opératoire étant particulièrement adapté aux systèmes de transmission haut débit qui doivent assurer une granularité au niveau paquet, tels que les systèmes ATM sur liaison radio.

Un autre objet de la présente invention est la mise en oeuvre d'un procédé permettant d'effectuer conjointement les opérations d'égalisation et de décodage de canal supprimant la nécessité d'une égalisation à sortie souple, du fait du caractère conjoint des opérations d'égalisation et de décodage de canal.

Un autre objet de la présente invention est la mise en oeuvre d'un procédé permettant d'effectuer conjointement les opérations d'égalisation et de décodage de canal particulièrement adapté au traitement d'une modulation à grand nombre d'états, ce qui permet de s'affranchir de l'augmentation significative de la complexité d'un processus au sens du maximum de vraisemblance de type classique.

Un autre objet de la présente invention est enfin la mise en oeuvre d'un procédé permettant d'effectuer conjointement les opérations d'égalisation et de décodage de canal permettant d'éviter le phénomène de propagation d'erreurs lors du décodage, par mise en oeuvre d'une version adaptée de l'algorithme de Viterbi.

Le procédé de décodage et d'égalisation conjointe d'un signal numérique protégé par un code défini par un treillis, objet de la présente invention, s'applique à un signal transmis par paquets non entrelacés. Chaque paquet comporte une séquence connue et une séquence de données codées, à chaque suite de bits $x = \{x_n\}$, de bit courant $x_n$, soumise au processus de codage défini par un treillis et à un processus de modulation, correspondant une suite de symboles $y = \{y_n\}$ de symbole courant $y_n$ vérifiant la relation $y_n = f(x_n; X_{n-1}, ..., x_{n-K})$. La suite de bits antérieurs au bit courant, $e_{n-1}(x) = \{x_{n-1}; x_{n-2}; ...; x_{n-K}\}$ représente l'état du processus de codage à l'état antérieur $n-1$ et le symbole courant $y_n$ de la suite de symboles vérifie la relation $y_n = f(x_n, e_{n-1}(x))$. Cette suite de symboles est soumise de fait à un filtrage transverse de réponse impulsionnelle finie de coefficients de filtrage $\{h_0; h_1; ...; h_L\}$ représentatifs du canal radioélectrique pour engendrer une suite de symboles observés $r = \{r_n\}$. Chaque symbole observé $r_n$ vérifie la relation $r_n = z_n + b_n$ où $z_n$ désigne un symbole courant en sortie du canal et $b_n$ un bruit résiduel affectant ce dernier. Chaque symbole courant en sortie du canal courant $z_n$ vérifie la relation :

$$\begin{aligned} z_n &= g(y_n; y_{n-1}; ...; y_{n-L}) \\ &= h_0 y_n + h_1 y_{n-1} + ... + h_L y_{n-L} \\ &= \phi(x_n; x_{n-1}; ...; x_{n-L-K}). \end{aligned}$$

Ce procédé consiste à estimer chaque bit courant $x_n$ de la suite de bits $x = \{x_n\}$ au sens du maximum de vraisemblance par minimisation de l'erreur quadratique entre symbole observé et symbole courant en sortie du canal

$$\varepsilon^2(x) = \sum_n \left| r_n - z_n \right|^2 = \sum_n \left| r_n - \phi(x_n; x_{n-1}; ...; x_{n-L-K}) \right|^2,$$

Il est remarquable en ce que, pour tout symbole courant en sortie du canal $z_n$ issu de la transmission, du fait de trajets multiples, la suite successive des symboles $\{y_{n-L}; y_{n-L+1}; y_{n-1}; y_n\}$ émise par le processus de codage pour la suite de bits $x = \{x_n\}$ correspondant à des états successifs $e_{n-L}(x); e_{n-L+1}(x); ...; e_{n-1}(x)$ et finalement $e_n(x)$, qui définissent des branches entre noeuds d'états successifs, une succession de branches dessinant un chemin d'un treillis représentant ce code, ce procédé consiste en outre à calculer l'erreur quadratique à partir de l'ensemble des symboles observés et des branches d'états successifs du processus de codage, en fonction de la métrique de branche de la dernière transition $e_{n-1}(x) \rightarrow e_n(x)$ du processus de codage, selon la relation :

$$\varepsilon^2(x) = \sum_n \left| r_n - \left\{ \sum_{k \geq 0} h_k y_{n-k} \right\} \right|^2 = \sum_n \left| r_n - h_0 y_n - \left\{ \sum_{k \geq 1} h_k y_{n-k} \right\} \right|^2$$

Cette métrique de branche est calculée par remontée des états successifs au niveau de chaque noeud d'état sur une longueur égale à la mémoire du canal, et à inhiber, au cours de cette remontée, le processus de propagation d'erreur du fait du calcul des métriques de branche, par mémorisation au niveau de chaque noeud $i$ et à chaque instant d'un nombre $S > 1$ de survivants, chaque survivant étant défini par une métrique accumulée $M(i,t,k)$ pour le noeud $i$ à l'instant $t$ pour le survivant de rang $k$ considéré $k \in [1,S]$, et par une mise à jour de chaque survivant à l'instant $t+1$ pour chaque noeud par calcul d'une métrique de branche et sélection des $S$ meilleures métriques de branche parmi l'ensemble des métriques de branche possibles au noeud considéré. Le survivant final est déterminé comme le survivant de plus petite métrique, $M_m(0, \tau, 1)$, et la séquence de bits d'information correspondante est lue par remontée des noeuds d'état successifs.

Le procédé, objet de la présente invention, trouve application à tout système de transmission ATM sur lien radio, avec granularité.

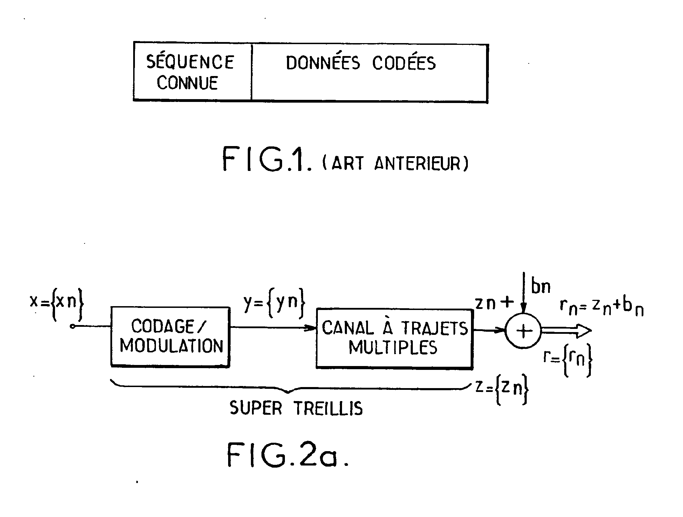

Il sera mieux compris à la lecture de la description et à l'observation des dessins ci-après, dans lesquels, outre la figure 1 relative à l'art antérieur,

- la figure 2a représente un schéma synoptique d'un processus de codage et de transmission permettant de définir le contexte de mise en oeuvre du procédé de décodage et d'égalisation conjointe d'un signal numérique protégé par un code défini par un treillis, conforme à l'objet de la présente invention ;
- la figure 2b représente à titre d'exemple illustratif un organigramme représentatif du procédé de codage et d'égalisation conjointe d'un signal numérique protégé par un code défini par un treillis, conforme à l'objet de la présente invention ;
- la figure 3a représente à titre illustratif un chemin du treillis codeur, en trait plein, et la suite des symboles $z_n$ correspondant à ce chemin ;
- les figures 3b et 3c représentent un schéma illustratif de calcul des S meilleures métriques à chaque noeud du treillis représenté en figure 3a ;
- la figure 4 représente un organigramme d'une variante de mise en oeuvre du procédé objet de l'invention tel que représenté en figure 2b ;
- la figure 5a représente un schéma synoptique d'un mode opératoire utilisé pour effectuer des essais de simulation de mise en oeuvre du procédé objet de la présente invention ;
- les figures 5b et 5c représentent différents essais comparatifs de valeurs de taux d'erreur de paquets obtenues grâce à la mise en oeuvre du procédé objet de la présente invention et à une solution optimale par décodage puis égalisation.

Préalablement à la description proprement dite du procédé de décodage et d'égalisation conjointe d'un signal numérique protégé par un code défini par un treillis, objet de la présente invention, des rappels relatifs à l'état de la technique et à l'état actuel des connaissances seront donnés ci-après.

Les systèmes de transmission d'informations, tels que les systèmes radiomobiles récents à accès multiples par répartition temporelle, transmettent les données sous forme de paquets de bits préalablement codés. A l'intérieur de ces paquets de bits est introduite une séquence dite d'apprentissage qui permet d'obtenir une bonne estimation du canal, incluant les filtres d'émission et de réception. La forme des paquets retenus dans le cadre de l'illustration de la mise en oeuvre du procédé, objet de la présente invention, est donnée ci-après en référence à la figure 1 relative à l'art antérieur. Les séquences de bits constitutives des séquences d'apprentissage peuvent par exemple être des séquences de Cazac choisies pour leurs propriétés d'auto-corrélation.

Le canal de transmission introduit ainsi des distorsions à la réception, ces distorsions étant appelées interférences entre symboles. Dans les solutions connues de l'art antérieur, il est nécessaire de mettre en oeuvre un égaliseur afin de réduire ou tenter de supprimer les distorsions précitées. Les fonctions d'égalisation et de décodage sont séparées dans les dispositifs de l'art antérieur précités.

Le contexte de génération des suites de bits dans le cadre du processus d'émission des systèmes radiomobiles précités est illustré maintenant en liaison avec la figure 2a.

D'une manière générale, on indique que le procédé, objet de la présente invention, s'applique à un signal numérique tel que représenté en figure 1, ce signal numérique étant protégé par un code défini par un treillis. On rappelle, ainsi, que la notion de code défini par un treillis recouvre les processus de codage convolutif, le codage de type TCM et le codage en blocs par exemple, de manière non limitative.

D'une manière plus spécifique, le signal est transmis sur le canal radioélectrique selon une transmission par paquets non entrelacés, chacun des paquets correspondant à la structure de données telle que représentée en figure 1.

En référence à la figure 2a, on indique que chaque suite de bits $x = \{x_n\}$, de bit courant $x_n$, est ainsi soumise au processus de codage défini par un treillis et à un processus de modulation auquel correspond une suite de symboles $y = \{y_n\}$, le symbole courant étant désigné par $y_n$. Ainsi, chaque symbole courant vérifie la relation :

$$y_n = f(x_n; x_{n-1}; \ldots; x_{n-K})$$

Dans la relation précédente, on indique que f désigne une fonction de codage de profondeur K tenant compte du processus de modulation.

La suite de bits antérieurs au bit courant $x_n$, suite de bits désignée par $e_{n-1}(x)$, vérifie la relation :

$$e_{n-1}(x) = \{x_{n-1}; x_{n-2}; \ldots; x_{n-K}\}$$

4

et représente l'état du processus de codage à l'état antérieur n-1. Le symbole courant $y_n$ de la suite de symboles vérifie alors la relation (1) :

$$y_n = f(x_n, e_{n-1}(x))  \qquad (1)$$

En raison de la présence d'un canal de transmission à trajets multiples, la suite de symboles y est de fait soumise à un processus équivalent à un filtrage transverse de réponse impulsionnelle finie pour lequel les coefficients de filtrage peuvent être définis par $\{h_0; h_1; ...; h_L\}$. Ces coefficients de filtrage sont représentatifs du canal radioélectrique de transmission.

Ainsi que représenté en figure 2a, la succession de l'opération de codage/modulation puis de transmission par le canal à trajets multiples permet d'engendrer une suite de symboles observés notée $r = \{r_n\}$, chaque symbole observé correspondant en fait à un symbole courant en sortie de canal, noté $z_n$, auquel un bruit résiduel $b_n$ est ajouté, ce bruit résiduel affectant chacun des symboles courant en sortie de canal précité. Le bruit résiduel est un bruit blanc Gaussien centré.

Ainsi, chaque symbole observé $r_n$ vérifie la relation :

$$R_n = z_n + b_n$$

Chaque symbole courant en sortie du canal vérifie la relation (2) :

$$z_n = g(y_n; y_{n-1}; ...; y_{n-L})$$
$$= h_0 y_n + h_1 y_{n-1} + ... + h_L y_{n-L}  \qquad (2)$$
$$= \phi(x_n; x_{n-1}; ...; x_{n-L-K})$$

Selon un aspect remarquable du procédé, objet de la présente invention, en référence à la figure 2a, on indique que le processus de codage/modulation et le processus de transmission par le canal à trajets multiples sont assimilés à une mise en cascade d'un code externe et d'un code interne, la fonction de code interne étant remplie par le canal de transmission à trajets multiples. Ainsi, les codes interne et externe sont respectivement constitués par un dispositif à mémoire qu'on peut représenter par un treillis. A l'ensemble, codeur canal + canal de transmission, correspond un treillis "global", appelé super-treillis, dont le nombre d'états est égal au produit du nombre d'états des deux treillis élémentaires, c'est-à-dire un nombre d'états égal à $2^{L+K}$ pour une modulation BPSK et un code de rendement 1/n. Le procédé objet de la présente invention est remarquable en ce qu'il utilise seulement le treillis du codeur canal, dont le nombre d'états est indépendant du nombre d'états de la modulation et de la longueur L du canal.

Alors que la complexité du treillis du code interne, c'est-à-dire du treillis engendré par le canal à trajets multiples croît de façon exponentielle avec le nombre d'états de la modulation et la longueur du canal en temps symbole, le simple décodage du super-treillis ainsi constitué est rendu prohibitif en complexité pour les transmissions à haut débit.

Dans les solutions les plus simples, la réduction du super-treillis est ramenée au seul treillis de codage externe, la métrique de branche étant alors calculée à la manière d'un processus de DFSE, pour *Decision Feedback Sequence Estimation,* par remontée des noeuds du treillis ainsi simplifié. Toutefois, un tel processus n'apparaît pas suffisamment efficace car il présente l'inconvénient d'un phénomène de propagation d'erreurs lors de la remontée des noeuds successive, erreurs inhérentes au processus DFSE précité.

Le procédé, objet de la présente invention, a pour objet de remédier aux inconvénients de la technique antérieure précitée par la détermination de la réception optimale à partir du super-treillis et par la mise en oeuvre d'une technique de décodage de Viterbi généralisée, plus communément désignée par décodage GVA, pour *Generalized Viterbi Algorithm.*

Pour une description plus détaillée de ce processus de décodage GVA, on pourra utilement se reporter à l'article publié par T.HASHIMOTO, intitulé A List-Type Reduced-Constraint Generalization of the Viterbi Algorithm, IEEE Transactions on Information Theory, Vol.IT-33, No. 6, Nov.1987.

Ainsi, conformément à un aspect particulièrement remarquable du procédé, objet de la présente invention, celui-ci consiste à estimer chaque bit courant $x_n$ de la suite de bits $x = \{x_n\}$ au sens du maximum de vraisemblance par minimisation de l'erreur quadratique entre symbole observé et symbole courant en sortie du canal $z_n$.

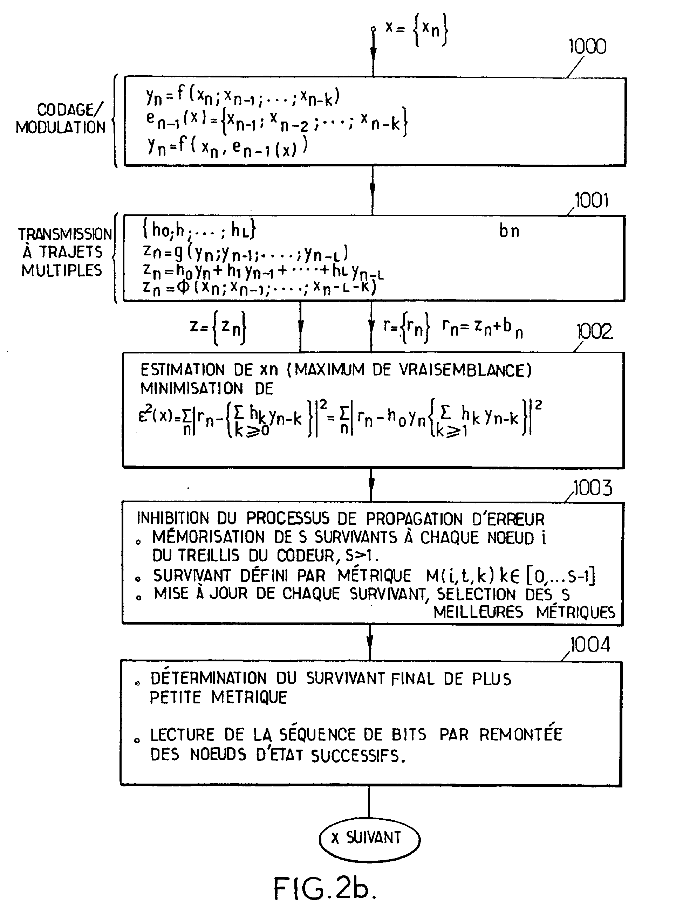

Sur la figure 2b, on a représenté, pour améliorer la compréhension de la mise en oeuvre du procédé, objet de la présente invention, l'étape de codage représentée à l'étape 1000 à partir de la suite de bits x, suivie d'une étape 1001 correspondant à la transmission à trajets multiples pour engendrer la suite de symboles observés $r = \{r_n\}$ et la suite de symboles courants en sortie du canal $z = \{z_n\}$.

L'étape 1001 est alors suivie d'une étape 1002 permettant d'initier l'estimation de $x_n$ par la minimisation de l'erreur quadratique vérifiant la relation :

$$\varepsilon^2(x) = \sum_n \left|r_n - z_n\right|^2 = \sum_n \left|r_n - \phi(x_n ; x_{n-1} ; ... ; x_{n-L-K})\right|^2 \; .$$

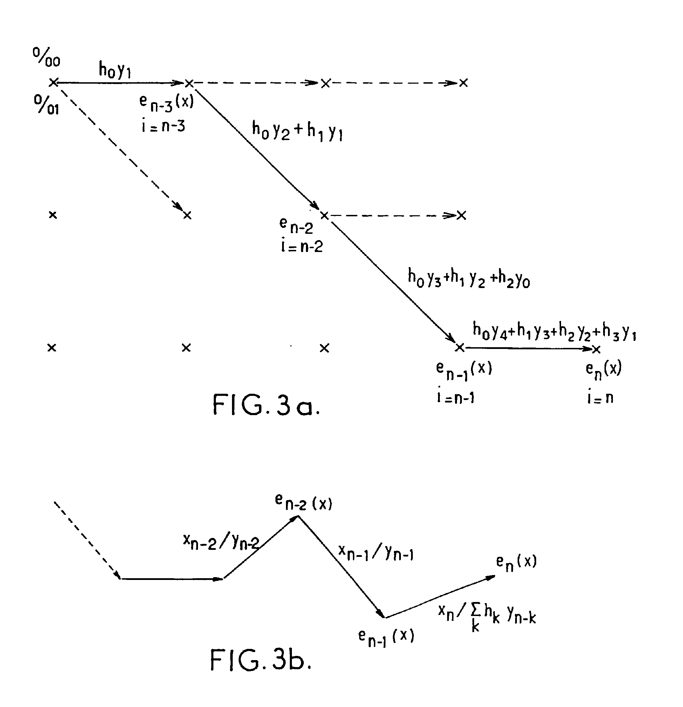

En référence à la figure 3a, on indique que pour tout symbole courant en sortie du canal $z_n$ issu de la transmission par trajets multiples, la suite successive des symboles $y_{n-L} ; y_{n-L+1} ; ... ; y$ étant émise par le processus de codage pour la suite de bits précitée, le processus de codage/modulation et de transmission correspond à des états successifs $e_{n-L}(x)$; $e_{n-L+1(x)} ; ... ; e_{n-1}(x)$ et finalement $e_{n(x)}$, ces états successifs correspondant à des branches entre noeuds d'états successifs ainsi que représenté sur la figure 3a précitée.

L'estimation des bits successifs $x_n$ au sens du maximum de vraisemblance, conformément au procédé objet de la présente invention, conduit alors à chercher la suite de bits $\{x_n\}$ qui minimise l'erreur quadratique exprimée précédemment.

Conformément au procédé, objet de la présente invention, cette erreur quadratique peut être exprimée en tenant compte des relations précédentes sous la forme de la relation (3) :

$$\varepsilon^2(x) = \sum_n \left|r_n - g(y_n ; y_{n-1} , ... , y_{n-L})\right|^2$$

$$= \sum_n \left|r_n - \left\{\sum_k h_k y_{n-k}\right\}\right|^2 \qquad\qquad (3)$$

avec $y_n = f(x_n ; e_{n-1}(\mathbf{x}))$.

Dans la relation (3) précédente, le terme $r_n - \left\{\sum_k h_k y_{n-k}\right\}$ peut être mis sous la forme :

$$r_n - \left\{h_0 f(x_n ; e_{n-1}(x)) + h_1 f(x_{n-1} ; e_{n-2}(x)) + ... + h_L f(x_{n-L} ; e_{n-L}(x))\right\}$$

Le terme entre accolades de la relation précédente correspond à la réponse du filtre transverse représentatif du canal de transmission à trajets multiples soumis à la suite des symboles à la suite du processus de codage/modulation sur une longueur L correspondant à la mémoire du canal, cette suite de symboles s'écrivant $y_{n-L}, y_{n-L+1}, ..., y_{n-1}, y_n$. Cette suite est émise par le codeur à t = n dans l'hypothèse d'une suite de bits $x = \{x_n\}$. Dans ces conditions, le codeur passe alors par les états $e_{n-L}(x), e_{n-L+1}(x) , ..., e_{n-1}(x)$ pour aboutir dans l'état $e_n(x)$. Le symbole courant en sortie du canal lors de la dernière transition est alors égal à $z_n = \sum_k h_k y_{n-k}$ .

La relation (4) ci-après :

$$\left| r_n - \left\{ \sum_{k \geq 0} h_k y_{n-k} \right\} \right|^2 = \left| r_n - h_0 y_n - \left\{ \sum_{k \geq 1} h_k y_{n-k} \right\} \right|^2 \qquad (4)$$

définit ainsi la métrique de branche de la dernière transition $e_{n-1}(x) \rightarrow e_n(x)$ et peut être calculée à la manière d'un processus DFSE en remontant les états successifs visités précédemment. Cette métrique dépend du chemin suivi dans le treillis pour arriver dans un état $e_n(x)$ donné.

Ce mode de calcul de la métrique contient intrinsèquement le problème de propagation d'erreur précédemment mentionné dans la description.

Pour cette raison, et dans le but de rendre robuste et efficace le procédé de décodage et d'égalisation conjointe, objet de la présente invention, celui-ci consiste en outre, à l'étape 1003 représentée en figure 2b, à inhiber au cours de cette remontée le processus de propagation d'erreur du fait du calcul des métriques de branche, cette inhibition étant réalisée par mémorisation, au niveau de chaque noeud i et à chaque instant t, d'un nombre S supérieur à 1 de survivants, chaque survivant étant défini par une métrique M(i,t,k) pour le noeud i à l'instant t pour le survivant de rang k considéré. Pour S survivants, on rappelle que $k \in [0,S-1]$. Une mise à jour de chaque survivant est alors effectuée à l'instant t+1 pour chaque noeud i par calcul d'une métrique de branche et sélection des S meilleures métriques de branche parmi l'ensemble des 2S métriques de branche possibles au noeud considéré.

L'étape 1003 précédemment décrite est alors suivie d'une étape 1004 consistant à déterminer le survivant final de plus petite métrique $M_m(0,\tau,1)$ et à lire la séquence de bits d'information correspondante par remontée d'état des noeuds d'états successifs.

On comprend bien sûr que le procédé, objet de la présente invention, peut alors être répété pour toute suite de bits suivante correspondant à un message transmis.

Une description plus détaillée du processus d'inhibition de la propagation d'erreurs sera maintenant donnée en liaison avec la figure 3b.

En référence à la figure 3b précitée, on indique que le processus d'inhibition de propagation d'erreurs consiste à retenir un nombre S > 1 de survivants en chaque noeud de rang i et à chaque instant t. En effet, si le vrai chemin du treillis, celui qui correspond à la séquence de symboles émise, n'est pas le meilleur à un instant donné, il ne doit cependant pas être perdu définitivement.

En référence à la figure précitée, on indique que le symbole courant en sortie du canal $z_n = \sum_k h_k y_{n-k}$.

est obtenu dans l'hypothèse où on arrive à l'état $e_n(x)$ par la succession d'états $e_{n-L}(x), e_{n-L+1}(x), \ldots, e_{n-1}(x)$, tel que représenté au dessin.

Dans l'hypothèse à titre d'exemple non limitatif d'un treillis issu d'un code convolutif de rendement 1/n correspondant donc à un treillis comportant $N = 2^K$ états, de chaque noeud partent ainsi deux branches, l'une correspondant à un bit de valeur 0 à l'entrée du codeur, l'autre à un bit 1 à cette même entrée du codeur.

A chaque noeud de rang i et à chaque instant t sont stockés S survivants, chaque survivant correspondant à une suite de bits, notée $S_{i,t,k}$ où i désigne le rang du noeud considéré, t l'instant correspondant et k le rang du survivant considéré tel que $0 \leq k \leq S-1$. Chaque suite de bits constitutive d'un survivant est caractérisée par une longueur appelée métrique accumulée de chemins, notée M(i,t,k), c'est-à-dire métrique du $k^{ème}$ survivant au noeud de rang i à l'instant t donné. On rappelle que la notion de métrique correspond à la définition selon laquelle, dans la théorie de la mesure dans un espace donné, la notion de métrique est basée sur la formule de la distance entre deux points de cet espace.

Les valeurs de métrique M(i,t,k) étant connues à un instant t quelconque, leur mise à jour à l'instant t+1 peut être effectuée de la manière ci-après, dans le cas d'un code de rendement 1/n :

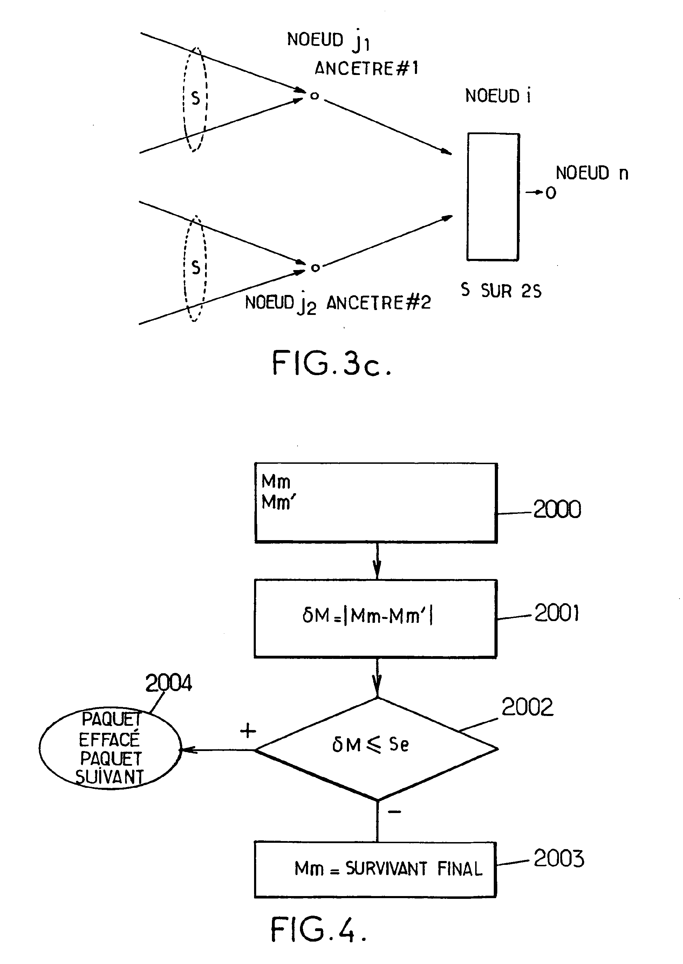

- tout noeud de rang i est consécutif à deux antécédents ou ancêtres, ainsi que représenté en figure 3c, $j_1$ et $j_2$, lesquels sont déterminés par leurs ensembles de S survivants respectifs tel que $S_{j1,t,k}$ et $S_{j2,t,k}$ avec $0 \leq k \leq S-1$ et de métriques respectives $M(j_1,t,k)$ et $M(j_2,t,k)$.Il existe ainsi 2S manières possibles d'atteindre un noeud de rang i à l'instant t+1 à raison de S possibilités pour l'ancêtre $j_1$ à l'instant t et S possibilités pour l'ancêtre $j_2$ à ce même instant t, chaque ancêtre étant de la forme d'un survivant à l'instant t prolongé d'une branche allant de $j_1$, respectivement $j_2$, vers le noeud de rang i.

Pour chacun des 2 x S candidats, la métrique de la dernière branche, c'est-à-dire celle incidente au noeud de rang i, est calculée selon la relation (4) précédente en remontant les chemins survivants en chaque ancêtre $j_1$ et $j_2$. Les métriques de branche ainsi obtenues sont notées $\delta m(j,i,k)$ et l'on obtient ainsi les quantités :

$$M(j_1,t,k) + \delta m(j_1,i,k)$$

pour k = 0, ... ,S-1

$$M(j_2,t,k) + \delta m(j_2,i,k)$$

avec k = 0, ... ,S-1.

Il est ainsi possible de retenir, pour le noeud de rang i à l'instant t+1, les S meilleurs chemins parmi les 2 x S possibles, ce qui permet d'obtenir S survivants pour le noeud de rang i à l'instant t+1.

En ce qui concerne la mise en oeuvre de l'étape 1004, on indique que celle-ci peut être effectuée lorsqu'on a reçu tous les symboles codés d'un paquet et que les opérations précédentes ont été réalisées, le survivant final de plus petite métrique pouvant alors être déterminé. Il s'agit dans cette hypothèse de la mise en oeuvre d'un algorithme de Viterbi selon une version étendue et il est alors possible de remonter le meilleur chemin pour lire la séquence de bits d'information correspondante par une opération de remontée, connue sous le nom de Back *Tracking* en langage anglo-saxon. En ce qui concerne le nombre de survivants retenus, on indique que S peut être pris égal à 4, de manière non limitative.

Une description plus détaillée d'un mode opératoire spécifique permettant d'améliorer la fiabilité du procédé, objet de la présente invention, sera maintenant donnée en liaison avec la figure 4.

Sur la figure 4, on a représenté le mode opératoire spécifique précité, lequel peut consister, en une étape 2000, à déterminer le second meilleur survivant vis-à-vis du survivant de plus petite métrique, la métrique de ce survivant final adjacent étant notée $M_{m'}(0,\tau,1)$, cette métrique étant voisine et immédiatement supérieure à la plus petite métrique précédemment mentionnée dans la description.

L'étape 2000 peut alors être suivie d'une étape 2001 consistant à calculer un écart de métrique, valeur absolue de la différence de métriques entre la plus petite métrique et la métrique voisine immédiatement supérieure, cet écart de métrique vérifiant la relation :

$$\delta_M = \left| M_m - M_{m'} \right|$$

A titre de simplification, les métriques ont été désignées par $M_m$ pour la métrique la plus petite et $M_{m'}$ pour la métrique voisine immédiatement supérieure à la plus petite métrique.

L'écart de métrique est ensuite comparé, en une étape 2002 de test, à une valeur de seuil selon la relation :

$$\delta_M \leq S_e$$

la valeur de seuil Se pouvant être définie à partir de résultats expérimentaux et de conditions d'utilisation.

Si $\delta_m$ est inférieur au seuil 2002, les deux meilleurs survivants sont trop proches et le choix entre les deux n'est pas fiable. Le paquet est déclaré effacé, 2004, car les deux décodages sur les deux chemins auraient conduit à des résultats différents.

Dans le cas contraire, $\delta_m$ > seuil, le décodage est présumé correct et le paquet est accepté, 2003.

Des simulations ont été réalisées afin de mettre en évidence les performances du procédé, objet de la présente invention, précédemment décrit.

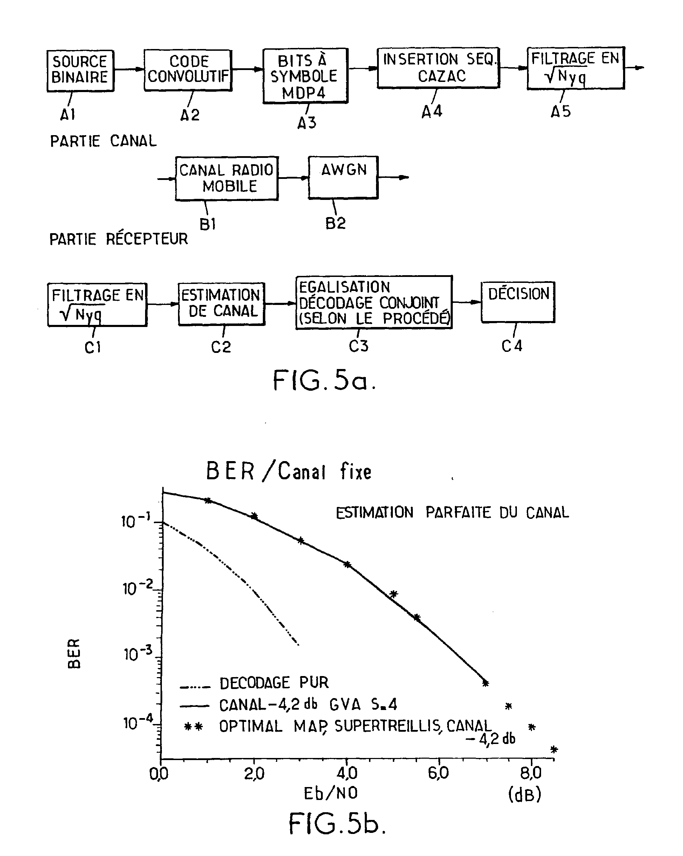

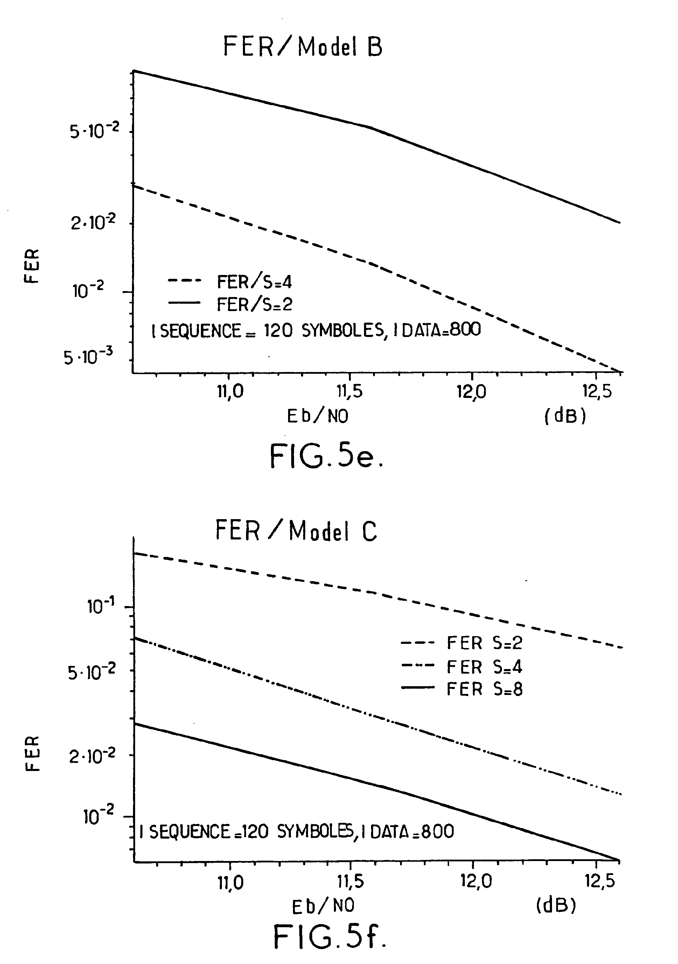

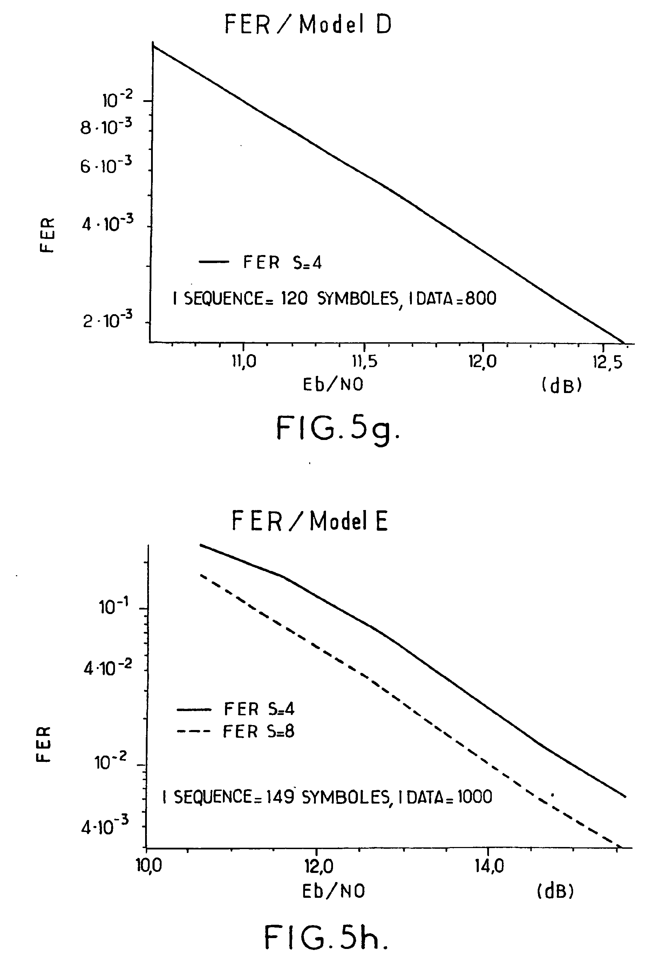

Sur la figure 5a, on a représenté les modes opératoires correspondants dans le cadre d'un schéma synoptique pour la partie canal à partir d'une source binaire $A_1$, d'un codeur introduisant un codage convolutif $A_2$, d'une modulation de canal de type MDP4 $A_3$, d'une insertion de séquence connue de type CAZAC $A_4$, et d'un filtrage en racine de Nyquist $A_5$.

En ce qui concerne la transmission par le canal radioélectrique multitrajets, celui-ci correspondait à un canal radiomobile $B_1$ suivi de l'addition d'un bruit blanc Gaussien additif (*Additive White Gaussian Noise*) $B_2$.

En ce qui concerne la partie réception, celle-ci correspondait à un filtrage en racine de Nyquist $C_1$, suivi d'une estimation de canal $C_2$ puis d'une égalisation et d'un décodage conjoints, conformes au procédé objet de la présente invention, $C_3$, et d'une décision $C_4$.

Les essais de simulation ont été réalisés grâce au logiciel COSSAP, commercialisé par la société SYNOPSYS.

EP 1 212 873 B1

Le facteur de roll-off du filtrage en racine de Nyquist a été fixé à 0,25 et le code convolutif utilisé était un code de longueur de contrainte 5, soit un treillis de 16 états. Les polynômes générateurs étaient de la forme :

$$G_1(D) = 1+D^3+D^4$$

et

$$G_2(D) = 1+D+D^3+D^4$$

introduisant une distance minimale de 7. La modulation choisie en sortie du code convolutif était une modulation de phase à quatre états tournée de 45° afin d'utiliser les séquences CAZAC.

La figure 5b représente les résultats d'essais avec un canal radioélectrique fixe, c'est-à-dire un canal comportant des coefficients de filtrage $h_0$, $h_1$, $h_2$ et $h_3$ de valeur fixée. Ces coefficients avaient les valeurs données ci-après dans le tableau 1 :

**TABLEAU 1**

| $h_0$ | $h_1$ | $h_2$ | $h_3$ |
|-------|-------|-------|-------|
| 0.38 | 0.60 | 0.60 | 0.38 |

Les résultats, comparés avec la solution optimale, sont représentés en figure 5b.

A l'observation de la figure 5b, on peut constater qu'alors que le procédé, objet de la présente invention, est sous-optimal, il donne toutefois des performances proches de la solution optimale pour une complexité abordable, c'est-à-dire S = 4.

La courbe de décodage pur, en trait mixte, correspond aux performances du code convolutif choisi en bruit Gaussien. Les résultats obtenus sont représentés en trait continu pour la mise en oeuvre du procédé, objet de la présente invention. La dégradation introduite par rapport au cas du décodage pur semble être inférieure à la valeur 4,2 dB et résulte de l'interaction entre le treillis du canal, code interne, et treillis du codage, code externe. Le procédé, objet de la présente invention, permet d'obtenir un résultat proche de la solution optimale représentée par points sur la figure 5b, l'axe des abscisses étant gradué en décibel dB et l'axe des ordonnées en taux d'erreur de bit BER.

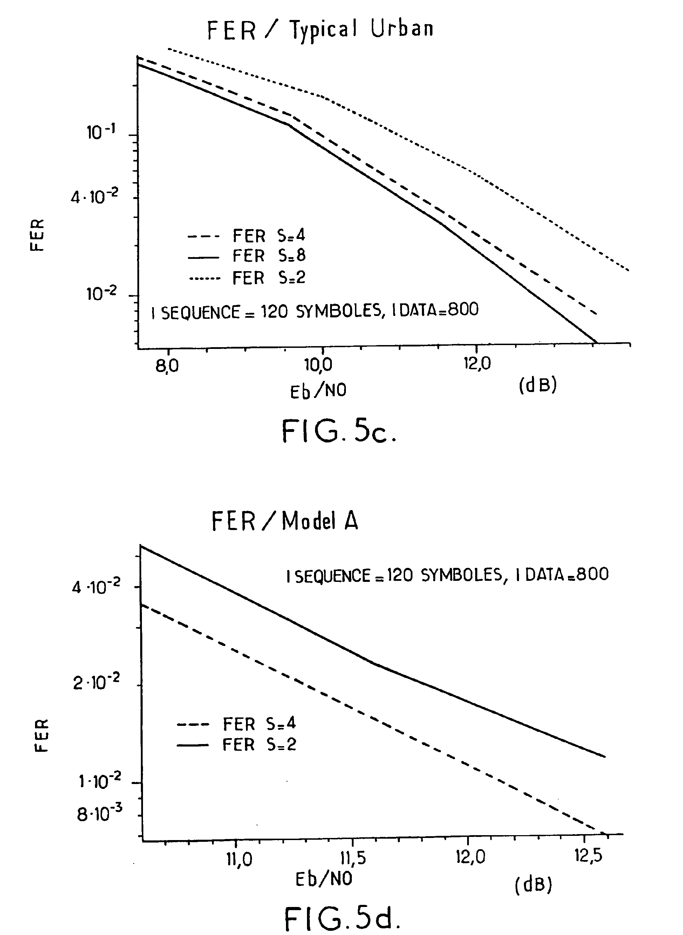

Les figures 5c à 5h représentent le taux d'erreur de trames en ordonnées FER, vis-à-vis du niveau en décibels en abscisses. En effet, pour des systèmes du type ATM fixe ou radio, seul le taux d'erreur de cellule ou de trame est pertinent.

Sur la figure 5c, on a représenté le cas d'un canal radiomobile de type *Typical Urban* du GSM pour un débit utile à 2 Mbit/s. Les coefficients du filtre représentatifs du canal de transmission radioélectrique suivent une distribution Gaussienne complexe, leur variation temporelle étant donnée par un profil Doppler normalisé. Au débit de 2 Mbit/s, un tel canal radioélectrique présente beaucoup d'interférences entre symboles en raison du haut niveau du débit. Le canal de type *Typical Urban* représenté en figure 5c correspond à une situation de type macrocellulaire urbain pour lequel le débit à 2 Mbit/s correspond bien à l'évolution des services mobiles vers le multimédia. Les valeurs des coefficients de filtrage sont données dans le tableau 2 pour le canal radioélectrique correspondant :

**TABLEAU 2**

| Numéro coefficient i | Temps relatif ($\mu$s) | Puissance moyenne (dB) | Spectre Doppler |
|---|---|---|---|
| 1 | 0.0 | -3.0 | CLASS |
| 2 | 0.2 | 0.0 | CLASS |
| 3 | 0.5 | -2.0 | CLASS |
| 4 | 1.6 | -6.0 | CLASS |
| 5 | 2.3 | -8.0 | CLASS |
| 6 | 5.0 | -10.0 | CLASS |

A l'observation de la figure 5c, on constate que le choix de S = 4 ou S = 8, ne provoque pas de changement très significatif des performances. En conséquence, on peut conclure que l'optimum est sensiblement atteint pour S = 4.

Des essais de simulation ont été également réalisés dans le cadre du projet BRAN pour un débit utile égal à 25 Mbit/s, le projet BRAN, pour *Broadband Radio Access Network* en langage anglo-saxon, correspondant à un projet européen visant la normalisation des réseaux radio ATM à haut débit dans des environnements de type intérieur. Ce projet réunit cinq modèles de canaux très sévères, c'est-à-dire très sélectifs en fréquence, modèle A, B, C, D et E pour lesquels des essais ont été réalisés et reportés aux figures 5d à 5h décrites ci-après. Le débit utilisateur de 25 Mbit/s pour une bande de 25 MHz était fixé pour un taux d'erreur de trame admissible fixé à $10^{-2}$.

Les différents types de canaux correspondant au modèle précité sont plus ou moins faciles à égaliser en fonction de leur statistique d'évanouissement et de leur délai RMS. Le modèle D représenté en figure 5g est le seul à contenir un évanouissement de type Rice, ce modèle étant facile à égaliser. Le modèle E est le plus difficile à égaliser, car son délai RMS atteint 250 ns et nécessite une séquence d'apprentissage permettant d'estimer le canal sur une durée de près de 50 symboles. Les performances sont ici dépendantes du nombre de survivants S choisi. Toutefois, le choix S = 4 semble un bon compromis performance/complexité pour l'ensemble des canaux.

Les paramètres radioélectriques du modèle A représenté en figure 5d sont donnés dans le tableau 3 ci-après :

**TABLEAU 3**

| Numéro Coeff. | Retard (ns) | Puissance moyenne (dB) | Facteur de Rice K | Spectre Doppler |
|---|---|---|---|---|
| 1 | 0 | 0.0 | 0 | CLASS |
| 2 | 10 | -0.9 | 0 | CLASS |
| 3 | 20 | -1.7 | 0 | CLASS |
| 4 | 30 | -2.6 | 0 | CLASS |
| 5 | 40 | -3.5 | 0 | CLASS |
| 6 | 50 | -4.3 | 0 | CLASS |
| 7 | 60 | -5.2 | 0 | CLASS |
| 8 | 70 | -6.1 | 0 | CLASS |
| 9 | 80 | -6.9 | 0 | CLASS |
| 10 | 90 | -7.8 | 0 | CLASS |
| 11 | 110 | -4.7 | 0 | CLASS |
| 12 | 140 | -7.3 | 0 | CLASS |
| 13 | 170 | -9.9 | 0 | CLASS |
| 14 | 200 | -12.5 | 0 | CLASS |
| 15 | 240 | -13.7 | 0 | CLASS |
| 16 | 290 | -18.0 | 0 | CLASS |
| 17 | 340 | -22.4 | 0 | CLASS |
| 18 | 390 | -26.7 | 0 | CLASS |

Ceux du modèle B sont donnés dans le tableau 4 ci-après :

**TABLEAU 4**

| Numéro coeff. | Retard (ns) | Puissance moyenne (dB) | Facteur de Rice K | Spectre Doppler |
|---|---|---|---|---|
| 1 | 0 | -2.6 | 0 | CLASS |
| 2 | 10 | -3.0 | 0 | CLASS |
| 3 | 20 | -3.5 | 0 | CLASS |
| 4 | 30 | -3.9 | 0 | CLASS |
| 5 | 50 | 0.0 | 0 | CLASS |

(suite)

| Numéro coeff. | Retard (ns) | Puissance moyenne (dB) | Facteur de Rice K | Spectre Doppler |
|---|---|---|---|---|
| 6 | 80 | -1.3 | 0 | CLASS |
| 7 | 110 | -2.6 | 0 | CLASS |
| 8 | 140 | -3.9 | 0 | CLASS |
| 9 | 180 | -3.4 | 0 | CLASS |
| 10 | 230 | -5.6 | 0 | CLASS |
| 11 | 280 | -7.7 | 0 | CLASS |
| 12 | 330 | -9.9 | 0 | CLASS |
| 13 | 380 | -12.1 | 0 | CLASS |
| 14 | 430 | -14.3 | 0 | CLASS |
| 15 | 490 | -15.4 | 0 | CLASS |
| 16 | 560 | -18.4 | 0 | CLASS |
| 17 | 640 | -20.7 | 0 | CLASS |
| 18 | 730 | -24.6 | 0 | CLASS |

Ceux du modèle C sont donnés dans le tableau 5 :

**TABLEAU 5**

| Numéro coeff. | Retard (ns) | Puissance moyenne (dB) | Facteur de Rice K | Spectre Doppler |
|---|---|---|---|---|
| 1 | 0 | -3.3 | 0 | CLASS |
| 2 | 10 | -3.6 | 0 | CLASS |
| 3 | 20 | -3.9 | 0 | CLASS |
| 4 | 30 | -4.2 | 0 | CLASS |
| 5 | 50 | 0.0 | 0 | CLASS |
| 6 | 80 | -0.9 | 0 | CLASS |
| 7 | 110 | -1.7 | 0 | CLASS |
| 8 | 140 | -2.6 | 0 | CLASS |
| 9 | 180 | -1.5 | 0 | CLASS |
| 10 | 230 | -3.0 | 0 | CLASS |
| 11 | 280 | -4.4 | 0 | CLASS |
| 12 | 330 | -5.9 | 0 | CLASS |
| 13 | 400 | -5.3 | 0 | CLASS |
| 14 | 490 | -7.9 | 0 | CLASS |
| 15 | 600 | -9.4 | 0 | CLASS |
| 16 | 730 | -13.2 | 0 | CLASS |
| 17 | 880 | -16.3 | 0 | CLASS |
| 18 | 1050 | -21.2 | 0 | CLASS |

Ceux du modèle D sont donnés dans le tableau 6 ci-après :

TABLEAU 6

| Numéro coeff. | Retard (ns) | Puissance moyenne (dB) | Facteur de Rice K | Spectre Doppler |
|---|---|---|---|---|
| 1 | 0 | 0.0 | 10 | CLASS+ SPIKE |
| 2 | 10 | -10.0 | 0 | CLASS |
| 3 | 20 | -10.3 | 0 | CLASS |
| 4 | 30 | -10.6 | 0 | CLASS |
| 5 | 50 | -6.4 | 0 | CLASS |
| 6 | 80 | -7.2 | 0 | CLASS |
| 7 | 110 | -8.1 | 0 | CLASS |
| 8 | 140 | -9.0 | 0 | CLASS |
| 9 | 180 | -7.9 | 0 | CLASS |
| 10 | 230 | -9.4 | 0 | CLASS |
| 11 | 280 | -10.8 | 0 | CLASS |
| 12 | 330 | -12.3 | 0 | CLASS |
| 13 | 400 | -11.7 | 0 | CLASS |
| 14 | 490 | -14.3 | 0 | CLASS |
| 15 | 600 | -15.8 | 0 | CLASS |
| 16 | 730 | -19.6 | 0 | CLASS |
| 17 | 880 | -22.7 | 0 | CLASS |
| 18 | 1050 | -27.6 | 0 | CLASS |

Ceux du modèle E sont donnés dans le tableau 7 ci-après :

TABLEAU 7

| Numéro coeff. | Retard (ns) | Puissance moyenne (dB) | Facteur de Rice K | Spectre Doppler |
|---|---|---|---|---|
| 1 | 0 | -4.9 | 0 | CLASS |
| 2 | 10 | -5.1 | 0 | CLASS |
| 3 | 20 | -5.2 | 0 | CLASS |
| 4 | 40 | -0.8 | 0 | CLASS |
| 5 | 70 | -1.3 | 0 | CLASS |
| 6 | 100 | -1.9 | 0 | CLASS |
| 7 | 140 | -0.3 | 0 | CLASS |
| 8 | 190 | -1.2 | 0 | CLASS |
| 9 | 240 | -2.1 | 0 | CLASS |
| 10 | 320 | 0.0 | 0 | CLASS |
| 11 | 430 | -1.9 | 0 | CLASS |
| 12 | 560 | -2.8 | 0 | CLASS |
| 13 | 710 | -5.4 | 0 | CLASS |
| 14 | 880 | -7.3 | 0 | CLASS |
| 15 | 1070 | -10.6 | 0 | CLASS |
| 16 | 1280 | -13.4 | 0 | CLASS |

(suite)

| Numéro coeff. | Retard (ns) | Puissance moyenne (dB) | Facteur de Rice K | Spectre Doppler |
|---|---|---|---|---|
| 17 | 1510 | -17.4 | 0 | CLASS |
| 18 | 1760 | -20.9 | 0 | CLASS |

**Revendications**

**1.** Procédé de décodage et d'égalisation conjointe d'un signal numérique protégé par un code défini par un treillis, ce signal étant transmis sur un canal radioélectrique selon une transmission par paquets non entrelacés, chaque paquet comportant une séquence connue et une séquence de données codées, à chaque suite de bits $x = \{x_n\}$, de bit courant $x_n$, soumise au processus de codage (1000) défini par un treillis et à un processus de modulation (1000) correspondant une suite de symboles $y = \{y_n\}$ de symbole courant $y_n$ vérifiant la relation $y_n = f(x_n; x_{n-1};...;x_{n-K})$, la suite de bits antérieurs au bit courant $e_{n-1}(x) = \{x_{n-1}; x_{n-2}; ...; x_{n-K}\}$ représentant l'état du processus de codage à l'état antérieur n-1 et le symbole courant $y_n$ de la suite de symboles vérifiant la relation $y_n = f(x_n, e_{n-1}(x))$, la suite de symboles étant soumise à un filtrage transverse de réponse impulsionnelle finie de coefficients de filtrage $\{h_0; h_1; ...; h_L\}$ représentatifs du canal radioélectrique de transmission à trajets multiples (1001) pour engendrer une suite de symboles observés $r = \{r_n\}$, chaque symbole observé $r_n$ vérifiant la relation $r_n = z_n + b_n$ où $z_n$ désigne un symbole courant en sortie du canal et $b_n$ un bruit résiduel affectant ce dernier, chaque symbole courant en sortie du canal $z_n$ vérifiant la relation :

$$
\begin{aligned}
z_n &= g \ (y_n; \ y_{n-1}; \ ... ; \ y_{n-L}) \\
&= h_0 y_n + h_1 y_{n-1} + \ ... \ + h_L y_{n-L} \\
&= \Phi(x_n; \ x_{n-1}; \ ...; x_{n-L-K})
\end{aligned}
$$

ce procédé consistant à estimer (1002) chaque bit courant $x_n$ de la suite de bits $x = \{x_n\}$ au sens du maximum de vraisemblance par minimisation de l'erreur quadratique entre symbole observé et symbole courant en sortie du canal,

$$
\varepsilon^2(x) = \sum_n \left| r_n - z_n \right|^2 = \sum_n \left| r_n - \phi(x_n; x_{n-1}; ...; x_{n-L-K}) \right|^2 ,
$$

**caractérisé en ce que,** pour tout symbole courant en sortie du canal $z_n$ issu de la transmission (1001), du fait de trajets multiples, la suite successive des symboles $\{y_{n-L}; y_{n-L+1}; y_{n-1}; y_n\}$ étant émise par le processus de codage pour la suite de bits $x = \{x_n\}$, ce processus de codage correspondant à des états successifs $e_{n-L}(x); e_{n-L+1}(x); ...; e_{n-1}(x)$ et finalement $e_n(x)$, correspondant à des branches entre noeuds d'états successifs du treillis du code, ce procédé consiste en outre:

- à calculer (1002) ladite erreur quadratique à partir de l'ensemble des symboles observés et des branches d'états successifs du processus de codage, en fonction de la métrique de branche de la dernière transition $e_{n-1}(x) \rightarrow e_n(x)$ du processus $e_n(x)$ de codage, selon la relation:

$$
\varepsilon^2(x) = \sum_n \left| r_n - \left\{ \sum_{k \geq 0} h_k y_{n-k} \right\} \right|^2 = \sum_n \left| r_n - h_0 y_n - \left\{ \sum_{k \geq 1} h_k y_{n-k} \right\} \right|^2
$$

ladite métrique de branche étant calculée par remontée des états successifs au niveau de chaque noeud d'état sur une longueur égale à la mémoire du canal ;
- à inhiber (1003), au cours de cette remontée le processus de propagation d'erreur du fait du calcul des métriques de branche par mémorisation au niveau de chaque noeud i et à chaque instant d'un nombre S > 1 de survivants, chaque survivant étant défini par une métrique accumulée M(i,t,k) pour le noeud i à l'instant t pour le survivant de rang k considéré k ∈ [0, ..., S-1], et par une mise à jour de chaque survivant à l'instant t+1 pour chaque noeud par calcul d'une métrique de branche et sélection des S meilleures métriques de branche parmi l'ensemble des métriques de branche possibles au noeud considéré;
- à déterminer (1004) le survivant final de plus petite métrique, $M_m(0,\tau,1)$, et à lire (1004) la séquence de bits d'information correspondante, par remontée des noeuds d'état successifs.

2. Procédé selon la revendication 1, **caractérisé en ce que** celui-ci consiste en outre:

- à déterminer (2000) un survivant final adjacent de métrique $M_{m'}(0,\tau,1)$ voisine immédiatement supérieure à la plus petit métrique,
- à calculer (2001) un écart de métrique valeur absolue de la différence de métrique entre la plus petite métrique et la métrique voisine immédiatement supérieure, $\delta_M = |M_m - M_{m'}|$;
- à comparer (2002) cet écart de métrique à une valeur de seuil $\delta_M \leq S_e$, cette valeur de seuil $S_e$ étant définie à partir de résultats expérimentaux et de conditions d'utilisation;
- à rejeter (2004) le survivant final lorsque ledit écart de métrique satisfait à la comparaison d'infériorité à cette valeur de seuil, ce qui permet d'améliorer la fiabilité du procédé.

**Claims**

1. Method of joint decoding and of equalization of a digital signal protected by a code defined by a trellis, this signal being transmitted on a radiofrequency channel according to a transmission with non-interlaced packets, each packet including a known sequence and a sequence of coded data, each sequence of bits $x = \{x_n\}$, from current bit $x_n$, subjected to the coding process (1000) defined by a trellis and to a modulation process (1000), having a corresponding sequence of symbols $y = \{y_n\}$, from current symbol $y_n$, satisfying the relationship $y_n = f(x_n; x_{n-1}; ...; x_{n-K})$, the sequence of bits prior to the current bit, $e_{n-1}(x) = \{x_{n-1}; x_{n-2}; ...; x_{n-K}\}$ representing the state of the coding process at the previous state n-1 and the current symbol $y_n$ of the sequence of symbols satisfies the relationship $y_n = f(x_n, e_{n-1}(x))$, the sequence of symbols being submitted to a transverse filtering with finite impulse response, with filtering coefficients $\{h_0; h_1; ...; h_L\}$ representative of the multiple-path transmission radiofrequency channel (1001) in order to generate a sequence of observed symbols $r = \{r_n\}$, each observed symbol $r_n$ satisfying the relationship $r_n = z_n + b_n$ where $z_n$ designates a current symbol at the output of the channel and $b_n$ a residual noise affecting the latter, each current symbol at the output of the current channel $z_n$ satisfying the relationship:

$$z_n = g \ (y_n; \ y_{n-1}; \ldots; \ y_{n-L})$$

$$= h_0 y_n + h_1 y_{n-1} + \ldots + h_L y_{n-L}$$

$$= \Phi(x_n; \ x_{n-1}; \ \ldots; x_{n-L-K})$$

this method consisting in estimating (1002) each current bit $x_n$ of the sequence of bits $x = \{x_n\}$ in the sense of the maximum likelihood by minimizing the quadratic error between observed symbol and current symbol at the channel output,

$$\varepsilon^2(x) = \sum_n \left| r_n - z_n \right|^2 = \sum_n \left| r_n - \phi(x_n; x_{n-1}; ...; x_{n-L-K}) \right|^2,$$

**characterized in that,** for any current symbol at the output of the channel $z_n$ arising from the transmission (1001), because of multiple paths, the successive sequence of the symbols $\{y_{n-L}; y_{n-L+1}; y_{n-1}; y_n\}$ arising from the coding process for the sequence of bits $x = \{x_n\}$ corresponding to successive states $e_{n-L}(x); e_{n-L+1}(x); ...; e_{n-1}(x)$ and finally $e_n(x)$, corresponding to branches between successive state nodes of the trellis of the code, this method moreover consisting:

- in calculating (1002) the said quadratic error on the basis of the set of observed symbols and of the successive state branches of the coding process, on the basis of the branch metric of the last transition $e_{n-1}(x) \rightarrow e_n(x)$ of the coding process $e_n(x)$, according to the relationship:

$$\varepsilon^2(x) = \sum_n \left| r_n - \left\{ \sum_{k \geq 0} h_k y_{n-k} \right\} \right|^2 = \sum_n \left| r_n - h_0 y_n - \left\{ \sum_{k \geq 1} h_k y_{n-k} \right\} \right|^2$$

the said branch metric being calculated by ascending the successive states at the level of each state node over a length equal to the memory of the channel;

- in inhibiting (1003), in the course of this ascent the process of error propagation because of the calculation of the branch metrics, by memory-storage at the level of each node i and at each instant of a number S > 1 of survivors, each survivor being defined by an accumulated metric M(i,t,k) for the node i at the instant t for the survivor of ranking k in question, $k \in [0, ..., S-1]$, and by an updating of each survivor at the instant t + 1 for each node by calculation of a branch metric and selection of the S best branch metrics from among the set of possible branch metrics at the node in question;

- in determining (1004) the final survivor with the smallest metric, $M_m(0,\tau,1)$, and in reading (1004) the corresponding sequence of information bits, by ascending successive state nodes.

2. Method according to Claim 1,
**characterized in that** it further consists:

- in determining (2000) a next-final survivor with metric $M_{m'}(0,\tau,1)$, adjacent to and immediately above the smallest metric,

- in calculating (2001) a metric offset, the absolute value in the difference in metrics between the smallest metric and the immediately higher adjacent metric, $\delta_M = |M_m - M_{m'}|$;

- in comparing (2002) this metric offset with a threshold value $\delta_M = \leq S_e$, this threshold value $S_e$ being defined on the basis of experimental results and of conditions of use;

- in rejecting (2004) the final survivor when the said metric offset satisfies the comparison of being below this threshold value, which makes it possible to enhance the reliability of the method.

**Patentansprüche**

1. Verfahren zur gemeinsamen Decodierung und Entzerrung eines digitalen Signals, das von einem durch ein Trellis definierten Code geschützt wird, wobei dieses Signal auf einem Funkkanal gemäß einer Übertragung in nicht verschachtelten Paketen übertragen wird, wobei jedes Paket eine bekannte Sequenz und eine Sequenz von codierten Daten enthält, wobei jeder Bitfolge x = {$x_n$} mit laufendem Bit $x_n$, die dem durch ein Trellis definierten Codierprozess (1000) und einem Modulationsprozess (1000) unterzogen wird, eine Symbolfolge y = {$y_n$} mit laufendem Symbol $y_n$ entspricht, die die Beziehung $y_n = f(x_n; x_{n-1}; ...; x_{n-K})$ bestätigt, wobei die Bitfolge vor dem laufenden Bit $e_{n-1}(x) = $ {$x_{n-1}; x_{n-2}; ...; x_{n-K}$} den Zustand des Codierprozesses im vorhergehenden Zustand n-1 darstellt, und das laufende Symbol $y_n$ der Symbolfolge die Beziehung $y_n = f(x_n, e_{n-1}(x))$ bestätigt, wobei die Symbolfolge einer Transversalfilterung einer endlichen Impulsantwort von Filterungskoeffizienten {$h_0; h_1; ...; h_L$} unterzogen wird, die für den Mehrwege-Funkübertragungskanal (1001) repräsentativ sind, um eine Folge von beobachteten Symbolen r = {$r_n$} zu erzeugen, wobei jedes beobachtete Symbol $r_n$ die Beziehung $r_n = z_n + b_n$ bestätigt, wobei $z_n$ ein laufendes Symbol am Ausgang des Kanals und $b_n$ ein Restrauschen bezeichnet, das sich auf diesen letzteren auswirkt, wobei jedes laufende Symbol am Ausgang des Kanals $z_n$ die folgende Beziehung bestätigt:

$$
\begin{aligned}
z_n &= g(y_n; \ y_{n-1}; \ ...; \ y_{n-L}) \\
&= h_0 y_n + h_1 y_{n-1} + ... + h_L y_{n-L} \\
&= \Phi(x_n; \ x_{n-1}; \ ...; \ x_{n-L-K})
\end{aligned}
$$

wobei dieses Verfahren darin besteht, jedes laufende Bit $x_n$ der Bitfolge x = {$x_n$} im Sinne der Maximum-Likelihood durch Minimierung des quadratischen Fehlers zwischen beobachtetem Symbol und laufendem Symbol am Ausgang des Kanals zu schätzen (1002)

$$\varepsilon'(x) = \sum_{n} |r_n - z_n|^2 = \sum_{n} |r_n - \phi(x_n; x_{n-1}; ...; x_{n-L-x})|^2 \, ,$$

**dadurch gekennzeichnet, dass** für jedes laufende Symbol am Ausgang des Kanals $z_n$, das von der Übertragung stammt (1001), aufgrund der Mehrwege, wobei die aufeinanderfolgende Symbolfolge $\{y_{n-L}; y_{n-L+1}; y_{n-1}; y_n\}$ vom Codierprozess für die Bitfolge $x = \{x_n\}$ emittiert wird, wobei dieser Codierprozess aufeinanderfolgenden Zuständen $e_{n-L}(x); e_{n-L+1}(x); ...; e_{n-1}(x)$ und schließlich $e_n(x)$ entspricht, die Zweigen zwischen aufeinanderfolgenden Zustandsknoten des Trellis des Codes entsprechen, dieses Verfahren außerdem darin besteht:

- den quadratischen Fehler ausgehend von der Gesamtheit der beobachteten Symbole und den Zweigen von aufeinanderfolgenden Zuständen des Codierprozesses in Abhängigkeit von der Zweigmetrik des letzten Übergangs $e_{n-1}(x) \rightarrow e_n(x)$ des Codierprozesses $e_n(x)$ gemäß der folgenden Beziehung zu berechnen (1002):

$$\varepsilon'(x) = \sum_{n} \left| r_n - \left\{ \sum_{k=0} h_k y_{n-k} \right\} \right|^2 = \sum_{n} \left| r_n - h_0 y_n - \left\{ \sum_{k=1} h_k y_{n-k} \right\} \right|^2$$

wobei die Zweigmetrik durch Anstieg der aufeinanderfolgenden Zustände auf die Ebene jedes Zustandsknotens über eine Länge gleich dem Speicher des Kanals berechnet wird;
- während dieses Anstiegs den Fehlerausbreitungsprozess aufgrund der Berechnung der Zweigmetriken durch Speicherung auf der Ebene jedes Knotens i und in jedem Zeitpunkt einer Anzahl $S > 1$ von Survivors, wobei jeder Survivor durch eine kumulierte Metrik $M(i,t,k)$ für den Knoten i im Zeitpunkt t für den Survivor des betrachteten Rangs k $k \in [0, ..., S-1]$ definiert wird, und durch eine Aktualisierung jedes Survivors im Zeitpunkt t+1 für jeden Knoten durch Berechnung einer Zweigmetrik und Auswahl der S besten Zweigmetriken aus der Gesamtheit der am betrachteten Knoten möglichen Zweigmetriken zu verhindern (1003);
- den End-Survivor kleinster Metrik $M_m(0,\tau,1)$ zu bestimmen (1004) und die entsprechende Informationsbitsequenz zu lesen, durch Anstieg der aufeinanderfolgenden Zustandsknoten (1004).

2. Verfahren nach Anspruch 1, **dadurch gekennzeichnet, dass** dieses außerdem darin besteht:

- einen angrenzenden End-Survivor der benachbarten Metrik $M_m.(0,\tau,1)$ zu bestimmen (2000), die direkt über der kleinsten Metrik liegt,
- einen Metrikabstand zu berechnen (2001), der der Absolutwert der Metrikdifferenz zwischen der kleinsten Metrik und der direkt darüberliegenden benachbarten Metrik $\delta_M = |M_m - M_{m'}|$ ist;
- diesen Metrikabstand mit einem Schwellwert $\delta_M \le S_e$ zu vergleichen (2002), wobei dieser Schwellwert $S_e$ ausgehend von experimentellen Resultaten und Nutzungsbedingungen definiert wird;
- den End-Survivor zurückzuweisen (2004), wenn der Metrikabstand dem Vergleich der Minderwertigkeit gegenüber diesem Schwellwert entspricht, was es ermöglicht, die Zuverlässigkeit des Verfahrens zu verbessern.

| SÉQUENCE CONNUE | DONNÉES CODÉES |
|---|---|

FIG.1. (ART ANTERIEUR)

$x = \{x_n\}$ → CODAGE / MODULATION → $y = \{y_n\}$ → CANAL À TRAJETS MULTIPLES → $z_n +$ $\xrightarrow{b_n}$ $(+)$ → $r_n = z_n + b_n$   $r = \{r_n\}$

$z = \{z_n\}$

SUPER TREILLIS

FIG.2a.

$$x = \{x_n\}$$

**1000**

CODAGE/
MODULATION

$$y_n = f(x_n; x_{n-1}; \ldots; x_{n-k})$$
$$e_{n-1}(x) = \{x_{n-1}; x_{n-2}; \ldots; x_{n-k}\}$$
$$y_n = f(x_n, e_{n-1}(x))$$

**1001**

TRANSMISSION
À TRAJETS
MULTIPLES

$$\{h_0; h; \ldots; h_L\} \qquad\qquad b_n$$
$$z_n = g(y_n; y_{n-1}; \ldots; y_{n-L})$$
$$z_n = h_0 y_n + h_1 y_{n-1} + \cdots + h_L y_{n-L}$$
$$z_n = \phi(x_n; x_{n-1}; \ldots; x_{n-L-k})$$

$$z = \{z_n\} \qquad r = \{r_n\} \quad r_n = z_n + b_n \qquad \textbf{1002}$$

ESTIMATION DE $x_n$ (MAXIMUM DE VRAISEMBLANCE)
MINIMISATION DE

$$\varepsilon^2(x) = \sum_n \left| r_n - \left\{ \sum_{k \geq 0} h_k y_{n-k} \right\} \right|^2 = \sum_n \left| r_n - h_0 y_n \left\{ \sum_{k \geq 1} h_k y_{n-k} \right\} \right|^2$$

**1003**

INHIBITION DU PROCESSUS DE PROPAGATION D'ERREUR
- MÉMORISATION DE S SURVIVANTS À CHAQUE NOEUD $i$
  DU TREILLIS DU CODEUR, S>1.
- SURVIVANT DÉFINI PAR MÉTRIQUE $M(i, t, k)$ $k \in [0, \ldots S-1]$
- MISE À JOUR DE CHAQUE SURVIVANT, SELECTION DES S
  MEILLEURES MÉTRIQUES

**1004**

- DÉTERMINATION DU SURVIVANT FINAL DE PLUS
  PETITE METRIQUE

- LECTURE DE LA SÉQUENCE DE BITS PAR REMONTÉE
  DES NOEUDS D'ÉTAT SUCCESSIFS.

X SUIVANT

# FIG.2b.

FIG. 3a.

FIG. 3b.

NOEUD $j_1$
ANCETRE#1

NOEUD i

NOEUD n

S SUR 2S

NOEUD $j_2$ ANCETRE#2

## FIG.3c.

Mm
Mm' — 2000

$\delta M = |Mm - Mm'|$ — 2001

2004

PAQUET
EFFACÉ
PAQUET
SUIVANT

+

$\delta M \leqslant Se$ — 2002

−

Mm = SURVIVANT FINAL — 2003

## FIG.4.

PARTIE CANAL

PARTIE RÉCEPTEUR

FIG.5a.

FIG.5b.

FIG. 5c.

FIG.5d.

# FER/Model B

FER

5·10⁻²

2·10²

10⁻²

5·10⁻³

--- FER/S=4
— FER/S=2
I SEQUENCE = 120 SYMBOLES, I DATA=800

11,0    11,5    12,0    12,5

Eb/N0                    (dB)

## FIG.5e.

# FER/Model C

FER

10⁻¹

5·10⁻²

2·10⁻²

10⁻²

--- FER S=2
-··- FER S=4
— FER S=8

I SEQUENCE =120 SYMBOLES, I DATA =800

11,0    11,5    12,0    12,5

Eb/N0                    (dB)

## FIG.5f.

## FER / Model D

FIG. 5g.

## FER / Model E

FIG. 5h.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• EP 0858196 A

**Littérature non-brevet citée dans la description**

• **T.HASHIMOTO.** A List-Type Reduced-Constraint Generalization of the Viterbi Algorithm. *IEEE Transactions on Information Theory,* Novembre 1987, vol. IT-33 (6